# EUROPÄISCHE PATENTANMELDUNG

(11) **EP 4 531 494 A1**
(43) Veröffentlichungstag der Anmeldung: **02.04.2025**
(21) Anmeldenummer: 24201001.5
(22) Anmeldetag: 18.09.2024
(51) Int. Cl.: H05B 1/02, B60H 1/22

(54) **SYSTEM UND VERFAHREN ZUR REGELUNG DER TEMPERATUR EINER MEHRSCHICHTIGEN VERBUNDSTRUKTUR**

(30) Priorität: 29.09.2023 DE 102023209657
(71) Anmelder: Benecke-Kaliko AG, 30419 Hannover (DE)
(72) Erfinder: Dr. Kneer, Janosch, 30419 Hannover (DE); Kegel, Isabell, 30419 Hannover (DE); Schleuniger, Juerg, 30419 Hannover (DE); Benz, Nicolai, 30419 Hannover (DE); Rösch, Simon, 30419 Hannover (DE); Dr. Nassauer, Benjamin, 30419 Hannover (DE)
(74) Vertreter: Continental Corporation

(57) **Zusammenfassung**

Die Erfindung betrifft ein System (10), aufweisend eine mehrschichtige Verbundstruktur (1) mit einer einlagigen oder mehrlagigen Oberschicht (2), einer aus einer ersten elektrisch leitfähigen Schicht (3) ausgebildeten Heizschicht (3) und wenigstens einem Temperatursensor (9), wobei ein erstes Sensorsignal (S1) des Temperatursensors (9) an eine mit dem Temperatursensor (9) verbundene elektronische Rechenvorrichtung (4) weiterleitbar ist. Die elektronische Rechenvorrichtung (4) ist ausgebildet, das zweite Sensorsignal (S2) des Näherungssensors (5) auszuwerten und eine bevorstehende Berührung der Verbundstruktur (1) zu erkennen, wobei die elektronische Rechenvorrichtung (4) nach Erkennung einer bevorstehenden Berührung und einem Überschreiten eines definierten Schwellwertes (S1ₘₐₓ) des Sensorsignals (S1) des Temperatursensors (9) dazu ausgebildet ist, ein Steuersignal (S3) auszugeben und die Heizleistung der Heizschicht (3) zu verringern oder zu unterbrechen.

## Beschreibung

Die Erfindung betrifft ein System, aufweisend eine mehrschichtige Verbundstruktur mit einer einlagigen oder mehrlagigen Oberschicht, einer aus einer ersten elektrisch leitfähigen Schicht ausgebildeten Heizschicht und wenigstens einem Temperatursensor, wobei ein erstes Sensorsignal des Temperatursensors an eine mit dem Temperatursensor verbundene elektronische Rechenvorrichtung weiterleitbar ist, wobei die elektronische Rechenvorrichtung ausgebildet ist, das erste Sensorsignal auf das Überschreiten eines definierten Schwellwertes zu überwachen. Die Erfindung betrifft außerdem ein Fahrzeug, sowie ein Verfahren zur Regelung der Temperatur einer mehrschichtigen Verbundstruktur.

Im Automobilbau werden weiche Innenraumoberflächen durch mehrschichtige Aufbauten erzielt. Diese Aufbauten umfassen häufig eine Schaumschicht und eine Oberschicht. Auf diese Weise können Bauteile wie Türverkleidungen, Instrumententafeln oder Armauflagen dargestellt werden. Um solche Oberflächen zu beheizen, kommen häufig Heizdrähte zum Einsatz. Um optische und haptische Abzeichnungen der Drähte an der Oberfläche auszuschließen, befinden sich diese Drähte üblicher Weise unter einer Schaumschicht. Aufgrund der Tatsache, dass zwischen derartigen Heizdrähten und der Oberschicht des mehrschichtigen Verbundmaterials eine Distanz von üblicherweise mehr als 10 mm besteht, wird die gewünschte Erwärmung nur zeitverzögert erreicht.

Ein weiterer Nachteil besteht darin, dass die Drähte üblicherweise mit verhältnismäßig großem Abstand verlegt werden, wodurch warme und kalte Regionen an der Oberfläche des mehrschichtigen Verbundmaterials entstehen können, was außerordentlich unerwünscht ist.

Daher wird angestrebt, möglichst dünne und großflächig beheizbare Lagen innerhalb des mehrschichtigen Verbundmaterials nahe an der Oberfläche anzuordnen.

Aus der EP 1 924 125 B1 ist es bekannt, eine Polymerschicht auf Basis von Polyurethan oder PVC durch Zugabe von leitfähigen Additiven, zum Beispiel Nanotubes, Silber, ionischen Flüssigkeiten, Graphitpartikeln und/oder Kupferpartikeln in das pastenförmige Kunststoffmaterial vor Ausbildung der Schicht elektrisch leitfähig auszurüsten, um diese nach Ausbildung der Schicht mittels Stromdurchfluss unmittelbar elektrisch zu beheizen.

Die DE 10 2020 215 949 A1 offenbart ein Verfahren zur Herstellung einer elektrisch heizbaren Schicht aus einem pastenförmigen Kunststoffmaterial, wobei in das Kunststoffmaterial ferner ein Kontaktierungsadditiv hineindispergiert wird, wodurch die elektrisch heizbare Schicht einfacher und zuverlässiger elektrisch kontaktierbar ist. Das pastenförmige Kunststoffmaterial kann in einem Druckverfahren auf das Trägermaterial appliziert werden, wodurch zum Beispiel Strukturen in Form von Leiterbahnen zur Stromzufuhr der elektrisch heizbaren Schicht gebildet werden können.

Nachteiliger Weise können sich die Oberflächen auf derartig hohe Temperaturen erwärmen, sodass ein direkter Kontakt mit der menschlichen Haut zumindest unangenehm empfunden wird oder sogar gesundheitsschädliche Verbrennungen verursachen kann.

Durch eine zunehmende Digitalisierung von Fahrzeugen und einer damit in Verbindung stehenden Erhebung von Sensordaten werden in modernen Fahrzeuganwendungen zunehmend Sensoren in den Oberflächen eines Fahrzeuginnenraums verbaut. Für eine hochauflösende Messung müssen die Sensoren nahe der Oberfläche integriert werden.

Die DE 10 2021 211 134 A1 offenbart ein Polsterelement mit einer unterhalb einem Bezug angeordneten elektrisch leitenden Funktionsschicht. Die Funktionsschicht kann beispielsweise einen Annäherungssensor bilden. Die Kombination eines derartigen Annäherungssensors in einem funktionellen Zusammenhang mit weiteren Funktionsschichten ist hingegen nicht bekannt.

Der Erfindung liegt die Aufgabe zugrunde, eine beheizbare mehrschichtige Verbundstruktur bereitzustellen, welche eine bevorstehende Berührung der Oberfläche durch einen Nutzer erkennen kann. Zusätzlich oder alternativ soll eine Lösung bereitgestellt werden, die bei Erkennung einer bevorstehenden Berührung die Temperatur der Oberfläche der mehrschichtigen Verbundstruktur so anpassen kann, dass Berührungen mit einer als unangenehm warm empfundenen oder sogar Verbrennungen verursachenden Oberfläche vermieden werden können.

Die Lösung dieser Aufgabe ergibt sich durch ein System mit den Merkmalen des unabhängigen Anspruchs 1.

Weitere vorteilhafte Ausbildungen sind in den abhängigen Ansprüchen offenbart. Eine weitere Lösung der Aufgabe ergibt sich durch ein Fahrzeug mit einem erfindungsgemäßen System gemäß Anspruch 7.

Anspruch 8 betrifft ein Verfahren zur Regelung der Temperatur einer mehrschichtigen Verbundstruktur.

Weitere Vorteile und Merkmale sind der allgemeinen Beschreibung sowie den Ausführungsbeispielen zu entnehmen.

Die vorliegende Erfindung betrifft ein System, aufweisend eine mehrschichtige Verbundstruktur mit einer einlagigen oder mehrlagigen Oberschicht, einer aus einer ersten elektrisch leitfähigen Schicht ausgebildeten Heizschicht und wenigstens einem Temperatursensor. Ein erstes Sensorsignal des Temperatursensors ist an eine mit dem Temperatursensor verbundene elektronische Rechenvorrichtung weiterleitbar, wobei die elektronische Rechenvorrichtung ausgebildet ist, das erste Sensorsignal auf das Überschreiten eines definierten Schwellwertes zu überwachen. Die Verbundstruktur weist wenigstens einen Näherungssensor auf, wobei ein zweites Sensorsignal des Näherungssensors an die elektronische Rechenvorrichtung weiterleitbar ist. Die elektronische Rechenvorrichtung ist ausgebildet, das zweite Sensorsignal auszuwerten und eine bevorstehende Berührung der Verbundstruktur zu erkennen, wobei die elektronische Rechenvorrichtung nach Erkennung einer bevorstehenden Berührung und einem Überschreiten des Schwellwertes dazu ausgebildet ist, ein Steuersignal auszugeben und die Heizleistung der Heizschicht zu verringern oder zu unterbrechen.

Die Oberschicht bildet die sichtbare Vorderseite der Verbundstruktur. Mit anderen Worten ist die Oberschicht von außen sichtbar, sodass die Oberschicht das optische Erscheinungsbild der Verbundstruktur bestimmt. Vorzugsweise ist die Oberschicht aus einem polymeren Material, beispielsweise einem thermoplastischem Polyolefin oder aus einem Polyurethan ausgebildet. Die Oberschicht kann jedoch auch ein textiles Flächengebilde oder ein Echtleder aufweisen bzw. daraus ausgebildet sein. Die Oberschicht kann eine sichtbare Vorderseite mit einer ggfs. reliefartigen Oberflächenstruktur in Form einer Narbung aufweisen, wie es typischer Weise bei einer Oberflächenfolie bzw. einem Kunstleder der Fall ist. Hierdurch können der Oberfläche der Verbundstruktur angenehme optische und haptische Eigenschaften verliehen werden, deren Effekt sich durch eine Strukturierung, z. B. in Form einer Prägung der die Oberfläche der Verbundstruktur bildenden außenliegenden Seite der Oberschicht, verstärken lässt.

Die Rechenvorrichtung kann innerhalb oder außerhalb der Verbundstruktur angeordnet sein und mit der Verbundstruktur über Leitungen zum Daten- und bzw. oder Signalaustausch verbunden sein. Die erfindungsgemäße Verbundstruktur und die Rechenvorrichtung bilden zusammen ein System zur Annäherungserkennung.

Es kann auf die Verwendung eines separaten Temperatursensors verzichtet werden, wenn die Heizschicht einen temperaturabhängigen Widerstand aufweist, vorzugsweise als PTC-Widerstand ausgebildet ist. Über eine auf der elektronischen Rechenvorrichtung hinterlegten Kennlinie kann jedem Widerstandswert der elektrisch leitfähigen Schicht eine Temperatur zugeordnet werden, sodass die Heizschicht selbst den Temperatursensor bilden kann. Die Heizschicht bzw. die elektrisch leitfähige Schicht kann entweder direkt auf die Rückseite der Oberschicht oder auf ein anderes folienartiges Substrat gedruckt und anschließend auf die Rückseite der Oberschicht kaschiert werden. Zum Drucken der elektrisch leitfähigen Schicht kann ein pastöses Material mit elektrisch leitfähigen Additiven, zum Beispiel aus Kohlenstoff oder Silber, versetzt werden. Es zeigt sich als vorteilhaft, dass die elektrisch leitfähige Schicht auf diese Weise besonders dünn und flexibel ausgebildet sein kann. Die elektrisch leitfähige Schicht kann so unmittelbar unter der Oberschicht angeordnet werden, ohne dass der optische und haptische Eindruck der sichtbaren Vorderseite der Oberschicht durch starre und lokal angeordnete Elektronikkomponenten negativ beeinflusst wird. Durch ein oberflächennahes Anordnen der elektrisch heizbaren Schicht, z.B. unmittelbar auf der Rückseite der Oberschicht, kann eine schnellere und bzw. oder energieeffizientere und bzw. oder gleichmäßigere Erwärmung der Oberschicht ermöglicht werden. Hier wirkt sich auch die flächige Ausgestaltung der Heizschicht im Vergleich zu einem Draht positiv aus. Bei einer beispielsweisen Verwendung der heizbaren mehrschichtigen Verbundstruktur als Strahlungsheizer im Innenraum eines Fahrzeugs können an der Oberfläche der Verbundstruktur Temperaturen von über 60°C, vorzugsweise nicht mehr als 80 °C erreicht werden.

Der Schwellwert repräsentiert eine maximal zulässige Temperatur, bis zu der eine Berührung der Oberfläche durch einen Benutzer unbedenklich ist. Je nach Auslegung des Systems kann der Schwellwert z.B. bei einer Temperatur von 60 °C liegen, bei welcher gemäß DIN EN ISO 13732-1 -2008 - 12 die Kontaktdauer bis zu einer Verbrennung bei Kunststoffmaterialien bei einer Minute liegt. Mit anderen Worten kann die Verbundstruktur in diesem Beispiel innerhalb einer Minute auf einen Wert unter 60 °C abkühlen, ohne dass für den Benutzer bei Berührung ein gesundheitliches Risiko bestehen würde. Durch eine möglichst geringe Wärmekapazität und bzw. oder Wärmeleitfähigkeit der Materialien der Verbundstruktur kann eine möglichst schnelle Abkühlung nach Verringerung oder Unterbrechung der Heizleistung der Heizschicht begünstigt werden.

Der Näherungssensor und bzw. oder der Temperatursensor können ebenfalls auf vergleichbare Weise über gedruckte elektrisch leitfähige Strukturen erzeugt werden. Der Temperatursensor und bzw. oder der Näherungssensor können hierzu jeweils als eine separate elektrisch leitfähige Schicht ausgebildet sein. Alternativ können der Temperatursensor und bzw. oder der Näherungssensor und bzw. oder die Heizschicht innerhalb einer elektrisch leitfähigen Schicht angeordnet bzw. durch diese gebildet sein. Durch die gleichzeitige Kombination der elektrisch leitfähigen Schicht als Sensor- und Heizelement kann die Anzahl der Komponenten, welche ausschließlich die Funktion des Sensors oder eines Heizelements erfüllen würden, reduziert werden. Durch die Integration mehrerer Funktionen in die elektrisch leitfähige Schicht kann ein besonders kompakter und bzw. oder kostengünstiger Aufbau der mehrschichtigen Verbundstruktur erfolgen.

Durch Drucken der elektrisch leitfähigen Strukturen können die Leiterbahnen der Heizschicht und bzw. oder des Temperatursensors und bzw. oder des Näherungssensors bereits innerhalb der mehrschichtigen Verbundstruktur vorgesehen sein. Hierdurch kann der Aufwand einer externen Verkabelung der elektrisch leitfähigen Schicht verringert bzw. komplett vermieden werden. Die Leiterbahnen sind stellenweise frei zugänglich, wodurch die Kontaktstellen mit externen Einrichtungen z. B. mit Steck- oder Crimpverbindungen elektrisch leitend verbunden werden können. Die Kontaktierungsposition kann durch entsprechendes Layout der gedruckten Leiterbahnen frei gewählt werden. Besonders vorteilhaft ist es hierbei die Oberschicht um die Bauteilkante herum auf die Rückseite einer Unterschicht zu führen und die Steck- oder Crimpverbinder dort im nicht sichtbaren Bereich anbringen zu können. Neben der ersten elektrisch leitfähigen Schicht können weitere elektrisch leitfähige Schichten unterhalb der Oberschicht angeordnet sein.

Alternativ können der Näherungssensor und bzw. oder der Temperatursensor als handelsübliche, auf einer Platine oder Leiterplatte angeordnete elektrische Komponenten, sogenannte SMD-Bauteile, ausgebildet sein. Der Näherungssensor kann entweder auf einer außenliegenden Seite der Oberschicht, vorzugsweise in einem Randbereich der Verbundstruktur, die außerhalb des für den Benutzer sichtbaren Bereichs liegt, oder innerhalb der Verbundstruktur angeordnet sein. Die Heizschicht bzw. die elektrisch leitfähige Schicht und bzw. oder der Näherungssensor und bzw. oder der Temperatursensor können zur Stromversorgung an eine Spannungsquelle angeschlossen werden. Der Temperatursensor und der Näherungssensor sind zur Weiterleitung der Sensorsignale an die elektronische Rechenvorrichtung bzw. die Auswerteelektronik angeschlossen.

Auf besonders vorteilhafte Weise kann durch das erfindungsgemäße System bereits bei Annäherung eines Benutzers die Heizleistung der Heizschicht reduziert oder sogar gestoppt werden, um die Oberfläche der mehrschichtigen Verbundstruktur bis zur Berührung ggfs. soweit herunterkühlen zu können, dass der Benutzer bei Berührung keinen unangenehm hohen Temperaturen ausgesetzt ist oder zumindest keine Verbrennungen erleidet.

Gemäß einem weiteren Aspekt der vorliegenden Erfindung ist der Näherungssensor als ein kapazitiver Sensor, aufweisend die erste elektrisch leitfähige Schicht, ein Dielektrikum und eine zweite elektrisch leitfähige Schicht, ausgebildet.

Die zweite elektrisch leitfähige Schicht kann ebenfalls als eine Heizschicht ausgebildet sein. Mit anderen Worten kann die erste elektrisch leitfähige Schicht sowohl eine Heizschicht als auch eine erste Elektrode des kapazitiven Sensors bilden. Die zweite elektrisch leitfähige Schicht kann ebenso eine Heizschicht als auch eine zweite Elektrode des kapazitiven Sensors bilden. Das Dielektrikum kann durch eine polymere, elektrisch nichtleitende Schicht gebildet sein.

Es können in einer Ebene betrachtet mehrere, voneinander unabhängige kapazitive Sensoren angeordnet sein, die gemeinsam eine Sensoranordnung bilden.

Gemäß einem weiteren Aspekt der vorliegenden Erfindung ist der Näherungssensor als ein optischer Sensor, ein Infrarotsensor oder ein Ultraschallsensor ausgebildet.

Der optische Sensor kann vorzugsweise ein so genannter "time-of-flight" Sensor sein, der aufgrund eines einfachen Aufbaus ohne bewegliche Einzelteile besonders wenig Bauraum beansprucht. Gleichzeitig kann eine Datenauswertung besonders schnell und präzise erfolgen. Der Näherungssensor kann entweder auf einer außenliegenden Seite der Oberschicht, vorzugsweise in einem Randbereich der Verbundstruktur, die außerhalb des für den Benutzer sichtbaren Bereichs liegt, oder innerhalb der Verbundstruktur, vorzugsweise unmittelbar unterhalb der zumindest stellenweise lichtdurchlässigen oder insgesamt transluzenten oder transparenten Oberschicht angeordnet sein.

Für die Verwendung eines Ultraschallsensors kann es besonders vorteilhaft sein, wenn die Oberschicht gelocht oder perforiert ist. Die Oberschicht kann so durchlässig für Ultraschallwellen sein. So kann der Ultraschallsensor von außerhalb nicht sichtbar unterhalb der Oberschicht angeordnet sein, ohne, dass die Funktionsweise des Ultraschallsensors negativ beeinträchtigt wird.

Eine weitere vorteilhafte Ausbildung der vorliegenden Erfindung sieht vor, dass die mehrschichtige Verbundstruktur eine Unterschicht aus einem Polymerschaum aufweist. Der Polymerschaum kann aus Polyvinylchlorid-, Polyolefin- oder Polyurethan ausgebildet sein. Der Polymerschaum kann zur Herstellung eines Haftverbunds mit einer der elektrisch leitfähigen Schichten gegebenenfalls eine Haftvermittlungsschicht aufweisen. Der Polymerschaum der Unterschicht kann zum Beispiel auf die mindestens erste elektrisch leitfähige Schicht aufkaschiert werden und der Verbundstruktur einen besonders weichen und qualitativ hochwertigen optischen und bzw. oder haptischen Eindruck verleihen.

Gemäß einem weiteren Aspekt der vorliegenden Erfindung ist die Oberschicht transluzent ausgebildet.

Auf besonders vorteilhafte Weise kann ein optischer Näherungssensor oder ein Infrarotsensor auch unterhalb der Oberschicht angeordnet sein, wenn die Oberschicht transluzent, also zumindest teilweise lichtdurchlässig ist. Auf besonders vorteilhafte Weise beträgt die Lichtdurchlässigkeit der Oberschicht 1 % bis 50 % in einem Wellenlängenbereich für sichtbares Licht zwischen 400 nm bis 780 nm oder in einem Wellenlängenbereich für infrarotes Licht zwischen 780 nm bis 10.000 nm, besonders bevorzugt in einem Wellenlängenbereich für kurzwelliges infrarotes Licht in einem Wellenlängenbereich zwischen 780 nm bis 1400 nm. Die transluzente Oberschicht ist so ausreichend lichtdurchlässig, um eine Annäherung eines Benutzers über den optischen Näherungssensor unterhalb der Oberschicht hinreichend erkennen zu können. Gleichzeitig können Elemente des Näherungssensors durch die diffuse Lichtverteilung der transluzenten Oberschicht von außen unsichtbar in der Verbundstruktur angeordnet werden.

Alternativ kann die Oberschicht auch transparent, also vollständig durchlässig für sichtbares Licht in einem Wellenlängenbereich zwischen 400 nm bis 780 nm sein. So kann der optische Näherungssensor eine Annäherung eines Benutzers mit einer besonders hohen Genauigkeit bzw. Sensitivität erfassen.

Gemäß einem weiteren Aspekt der vorliegenden Erfindung ist die mehrschichtige Verbundstruktur Teil eines Verkleidungselements. So kann die mehrschichtige Verbundstruktur Teil eines beliebigen Verkleidungselement mit einer dekorativen Oberfläche sein, welches durch die zusätzliche Sensorfunktion und die elektrische Heizbarkeit einen funktionellen Mehrwert bietet, ohne dass die optische und haptische Anmutung negativ beeinflusst wird. Vorzugsweise kann das Verkleidungselement ein Armaturenträger, eine Armlehne oder eine Türverkleidung im Fahrzeuginnenraum sein. Es können so verschiedene Oberflächen im Fahrzeuginnenraum beheizt werden und großflächig Wärme abgeben, ohne dass von dem Verkleidungselement bei Berührung der Oberflächen für die Fahrzeuginsassen eine Gefahr von Verbrennungen ausgeht.

Die zuvor genannten Eigenschaften und Vorteile lassen sich gemäß einem weiteren Aspekt der vorliegenden Erfindung auf ein Fahrzeug mit einem erfindungsgemäßen System übertragen.

Die vorliegende Erfindung betrifft weiterhin ein Verfahren zur Regelung der Temperatur einer mehrschichtigen Verbundstruktur unter Verwendung des erfindungsgemäßen Systems, gekennzeichnet durch die folgenden Verfahrensschritte:
a) Erfassen eines ersten Sensorsignals durch den wenigstens einen Temperatursensor und Weiterleiten des ersten Sensorsignals an die elektronische Rechenvorrichtung,
b) Erfassen eines zweiten Sensorsignals durch den wenigstens einen Näherungssensor und Weiterleiten des zweiten Sensorsignals an die elektronische Rechenvorrichtung,
c) Auswertung des ersten Sensorsignals auf das Überschreiten eines definierten Schwellwertes durch die elektronische Rechenvorrichtung,
d) Auswertung des zweiten Sensorsignals und ggfs. Erkennung einer bevorstehenden Berührung der Oberfläche der Verbundstruktur durch die elektronische Rechenvorrichtung,
e) Ausgabe eines Steuersignals nach Erkennung einer bevorstehenden Berührung und einem Überschreiten des Schwellwertes zur Verringerung oder Unterbrechung der Heizleistung der Heizschicht.

Die zuvor genannten Eigenschaften und Vorteile des erfindungsgemäßen Systems haben für das beanspruchte Verfahren gleichermaßen Gültigkeit.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand des Anspruchs 1 und bzw. oder dem unabhängigen Anspruch 8 kombinierbar ist.

Anhand der Zeichnungen werden im Folgenden Ausführungsbeispiele der Erfindung schematisch dargestellt und näher erläutert.
Fig. 1 zeigt eine schematische Darstellung des erfindungsgemäßen Systems gemäß eines ersten Ausführungsbeispiels in einer Schnittdarstellung.
Fig. 2 zeigt eine schematische Darstellung des erfindungsgemäßen Systems gemäß eines zweiten Ausführungsbeispiels in einer Schnittdarstellung.
Fig. 3 zeigt eine schematische Darstellung des erfindungsgemäßen Systems gemäß eines dritten Ausführungsbeispiels in einer Schnittdarstellung.

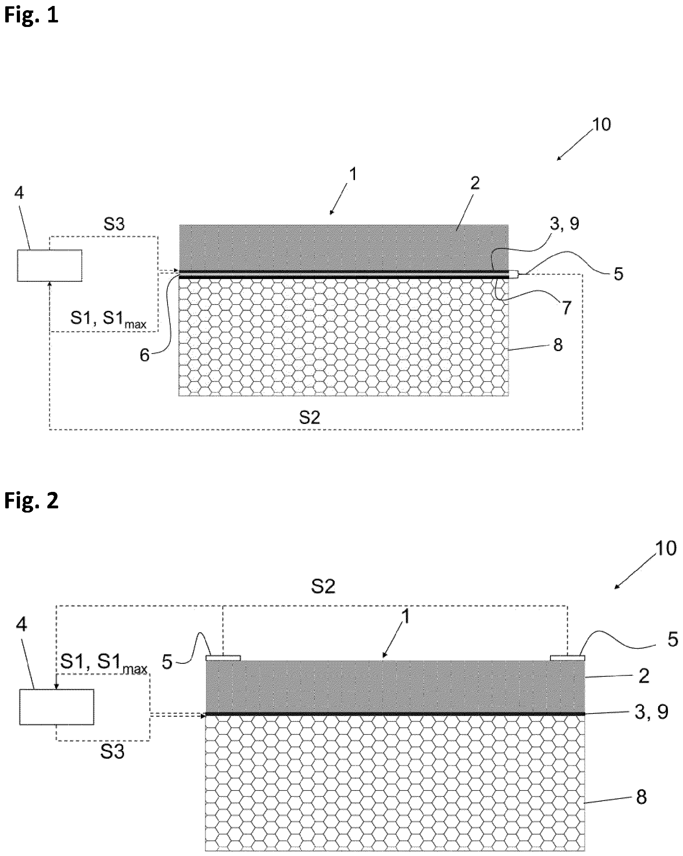

Die Fig. 1 zeigt ein System 10 mit einer mehrschichtigen Verbundstruktur 1 mit einer Oberschicht 2, einer ersten elektrisch leitfähigen Schicht 3, einem Dielektrikum 6, einer zweiten elektrisch leitfähigen Schicht 7 und einer Unterschicht 8. Die erste elektrisch leitfähige Schicht 3, das Dielektrikum 6 und die zweite elektrisch leitfähige Schicht 7 bilden gemeinsam einen als kapazitiven Sensor ausgebildeten Näherungssensor 5. Die erste elektrisch leitfähige Schicht 3 weist zudem einen Temperatursensor 9 auf.

Die erste elektrisch leitfähige Schicht 3 und die zweite elektrisch leitfähige Schicht 7 sind durch ihren inneren Widerstand bei Stromfluss beheizbar, sodass die mehrschichtige Verbundstruktur 1 zusätzlich als Flächenheizelement, z. B. zum Beheizen von Oberflächen im automobilen Innenraum, verwendbar ist. Die erste elektrisch leitfähige Schicht 3 ist in einem Druckverfahren als pastöse Masse auf eine Rückseite der Oberschicht 2 gedruckt. Auf die erste elektrisch leitfähige Schicht 3 ist das Dielektrikum 6 aufgebracht. Das Dielektrikum 6 wird durch eine polymere, elektrisch nichtleitende Schicht gebildet. Auf die zweite elektrisch leitfähige Schicht 7 ist die Unterschicht 8 aus Polymerschaum mit Hilfe einer zusätzlichen Haftvermittlerschicht aufkaschiert. Außerhalb der Verbundstruktur 1 ist eine elektronische Rechenvorrichtung 4 angeordnet. Der Temperatursensor 9 ist zum Datenaustausch mit der Rechenvorrichtung 4 über eine Leitung verbunden, wobei ein erstes Sensorsignal S1 des Temperatursensors 9 an die elektronische Rechenvorrichtung 4 weiterleitbar ist. Die elektronische Rechenvorrichtung 4 überwacht das erste Sensorsignal S1 auf das Überschreiten eines definierten Schwellwertes S1ₘₐₓ. Der Schwellwert S1ₘₐₓ repräsentiert eine maximal zulässige Temperatur, bis zu der eine Berührung der Oberfläche durch einen Benutzer unbedenklich ist. Ein zweites Sensorsignal S2 des Näherungssensors 5 ist ebenfalls an die elektronische Rechenvorrichtung 4 weiterleitbar, wobei die elektronische Rechenvorrichtung 4 das zweite Sensorsignal S2 auswertet und eine bevorstehende Berührung der Verbundstruktur 1 erkennen kann. Nach Erkennung einer bevorstehenden Berührung und einem Überschreiten des Schwellwertes S1ₘₐₓ wird durch die Recheneinheit 4 ein Steuersignal S3 ausgegeben, um die Heizleistung der Heizschicht 3 zu verringern oder zu unterbrechen.

Die Fig. 2 zeigt das erfindungsgemäße System 10 gemäß eines zweiten Ausführungsbeispiels. Im Unterschied zu der Darstellung der Figur 1 weist die Verbundstruktur 1 der Figur 2 nur eine einzige elektrisch leitfähige Schicht, nämlich die als Heizschicht ausgebildete erste elektrisch leitfähige Schicht 3 mit dem Temperatursensor 9 auf. Auf einer außenliegenden Seite der Oberschicht 2 sind zwei optische Näherungssensoren 5 an den äußeren Randbereichen der Verbundstruktur 1 angeordnet.

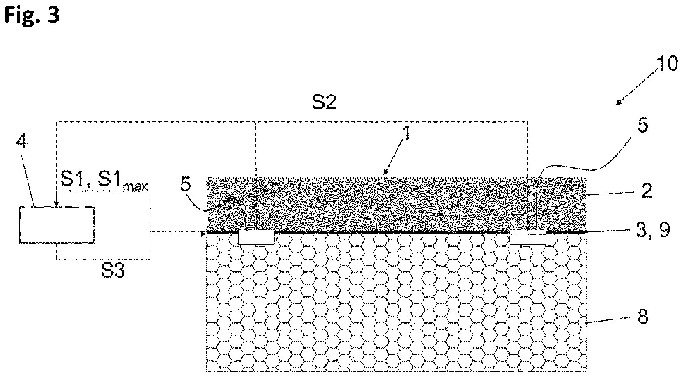

Die Fig. 3 zeigt das erfindungsgemäße System 10 gemäß eines dritten Ausführungsbeispiels. Im Unterschied zu der Darstellung der Figur 2 weist die Verbundstruktur 1 der Figur 3 zwei optische Näherungssensoren 5 auf, die unterhalb der Oberschicht 2 innerhalb der Verbundstruktur 1 angeordnet sind. Die erste elektrisch leitfähige Schicht 3 weist im Bereich der Anordnung der Näherungssensoren 5 jeweils eine Aussparung auf. Die Näherungssensoren 5 und die erste elektrisch leitfähige Schicht 3 sind in einer Ebene angeordnet. Damit die optischen Näherungssensoren 5 eine Annäherung eines Benutzers hinreichend präzise und verlässlich erkennen können, ist die Oberschicht 2 transluzent ausgebildet.

### Bezugszeichenliste (Teil der Beschreibung)

- 1: Mehrschichtige Verbundstruktur
- 2: Oberschicht
- 3: erste elektrisch leitfähige Schicht, Heizschicht
- 4: elektronische Rechenvorrichtung
- 5: Näherungssensor
- 6: Dielektrikum
- 7: Zweite elektrisch leitfähige Schicht
- 8: Unterschicht
- 9: Temperatursensor
- 10: System

- S1: erstes Sensorsignal des Temperatursensors
- S1ₘₐₓ: Schwellwert des ersten Sensorsignals
- S2: zweites Sensorsignal des Näherungssensors
- S3: Steuersignal

## Patentansprüche

1. System (10), aufweisend eine mehrschichtige Verbundstruktur (1) mit einer einlagigen oder mehrlagigen Oberschicht (2),
einer aus einer ersten elektrisch leitfähigen Schicht (3) ausgebildeten Heizschicht (3) und wenigstens einem Temperatursensor (9), wobei ein erstes Sensorsignal (S1) des Temperatursensors (9) an eine mit dem Temperatursensor (9) verbundene elektronische Rechenvorrichtung (4) weiterleitbar ist, wobei die elektronische Rechenvorrichtung (4) ausgebildet ist, das erste Sensorsignal (S1) auf das Überschreiten eines definierten Schwellwertes (S1ₘₐₓ) zu überwachen,
**dadurch gekennzeichnet, dass**
die Verbundstruktur (1) wenigstens einen Näherungssensor (5) aufweist, wobei ein zweites Sensorsignal (S2) des Näherungssensors (5) an die elektronische Rechenvorrichtung (4) weiterleitbar ist, wobei die elektronische Rechenvorrichtung (4) ausgebildet ist, das zweite Sensorsignal (S2) auszuwerten und eine bevorstehende Berührung der Verbundstruktur (1) zu erkennen, wobei die elektronische Rechenvorrichtung (4) nach Erkennung einer bevorstehenden Berührung und einem Überschreiten des Schwellwertes (S1ₘₐₓ) dazu ausgebildet ist, ein Steuersignal (S3) auszugeben und die Heizleistung der Heizschicht (3) zu verringern oder zu unterbrechen.

2. System (10) nach Anspruch 1,
**dadurch gekennzeichnet, dass**
der Näherungssensor (5) als ein kapazitiver Sensor, aufweisend die erste elektrisch leitfähige Schicht (3), ein Dielektrikum (6) und eine zweite elektrisch leitfähige Schicht (7), ausgebildet ist.

3. System (10) nach Anspruch 1,
**dadurch gekennzeichnet, dass**
der Näherungssensor (5) als ein optischer Sensor, ein Infrarotsensor oder ein Ultraschallsensor ausgebildet ist.

4. System (10) nach einem der vorhergehenden Ansprüche,
**dadurch gekennzeichnet, dass**
die mehrschichtige Verbundstruktur (1) eine Unterschicht (8) aus einem Polymerschaum aufweist.

5. System (10) nach einem der vorhergehenden Ansprüche,
**dadurch gekennzeichnet, dass**
die Oberschicht (2) transluzent ausgebildet ist.

6. System (10) nach einem der vorhergehenden Ansprüche,
**dadurch gekennzeichnet, dass**
die mehrschichtige Verbundstruktur (1) Teil eines Verkleidungselements ist.

7. Fahrzeug mit einem System (10) nach einem der vorhergehenden Ansprüche.

8. Verfahren zur Regelung der Temperatur einer mehrschichtigen Verbundstruktur (1) unter Verwendung eines Systems (10) nach einem der Ansprüche 1 bis 6,
**gekennzeichnet durch** die folgenden Verfahrensschritte:
a) Erfassen eines ersten Sensorsignals (S1) durch wenigstens einen Temperatursensor (9) und Weiterleiten des ersten Sensorsignals (S1) an eine elektronische Rechenvorrichtung (4),
b) Erfassen eines zweiten Sensorsignals (S2) durch wenigstens einen Näherungssensor (5) und Weiterleiten des zweiten Sensorsignals (S2) an die elektronische Rechenvorrichtung (4),
c) Auswertung des ersten Sensorsignals (S1) auf das Überschreiten eines definierten Schwellwertes (S1ₘₐₓ) durch die elektronische Rechenvorrichtung (4),
d) Auswertung des zweiten Sensorsignals (S2) und ggfs. Erkennung einer bevorstehenden Berührung der Oberfläche der Verbundstruktur (1) durch die elektronische Rechenvorrichtung (4),
e) Ausgabe eines Steuersignals (S3) nach Erkennung einer bevorstehenden Berührung und einem Überschreiten des Schwellwertes (S1ₘₐₓ) zur Verringerung oder Unterbrechung der Heizleistung der Heizschicht (3).
